# EUROPEAN PATENT SPECIFICATION

(11) **EP 2 556 105 B1**
(45) Date of publication and mention of the grant of the patent: **20.05.2015**
(21) Application number: 11714962.5
(22) Date of filing: 08.04.2011
(51) Int. Cl.: C09C 3/12

(54) **SOLID SILANES**
FESTE SILANE
SILANES SOLIDES

(30) Priority: 09.04.2010 IN CH09902010
(43) Date of publication of application: 13.02.2013
(73) Proprietor: Dow Corning Corporation, Midland, Michigan 48611 (US)
(72) Inventor: GALLEZ, Laurence, B-7050 (BE); THIBAUT, Marc, B-7160 (BE)
(74) Representative: Cooke, Richard Spencer
(86) International application number: PCT/EP2011/055499
(87) International publication number: WO 2011/124677

(56) References cited:
- EP-A2- 0 426 073
- US-A- 4 657 784
- US-A- 5 200 236
- US-A1- 2003 165 682
- US-A1- 2004 234 769
- US-A1- 2005 154 085

## Description

This invention relates to solid compositions comprising silanes and methods of preparing the solid compositions comprising silanes and uses of the solid compositions comprising silanes. In particular, this invention relates to solid compositions comprising reactive silanes and a method of preparing the solid compositions comprising reactive silanes without causing condensation.

Silanes have found use *inter alia* as efficient coupling agents, crosslinkers, adhesion promoters and hydrophobing agents. Their versatility, which results from the wide variation in their organic subsituents, allows them to be compatible with a wide range of polymer matrixes. However, few silanes are available in solid form, and therefore most silanes cannot be used by those not equipped to handle liquids and moreover hazardous liquids. Consequently, processes to prepare silanes in a solid form are desirable.

One group of silanes of particular interest are alkoxy silanes which have the general formula RnSiOR(4-n) where R is an organic group which can be either hydrophobic (e.g. alkyl, methacrylate) or hydrophilic (e.g. amino, glycido).

Alkoxysilanes have been used in a variety of applications, the most common ones being:
- Crosslinking agents (R = vinyl, methyl or sulfido)
- Hydrophobing agent (R = alkyl)
- Coupling agent (R= glycido, methacrylate or amino)
- Adhesion promoters (R = amino or glycido)

Alkoxysilanes undergo two successive reactions when they come into contact with water : a hydrolysis step (a) which leads to the formation of silanol groups (Si-OH) and a subsequent condensation step either between two silanol groups (b1) or a silanol and a alkoxy silane group (b2) to form a siloxane (-Si-O-Si-).
(a) -Si-OR + H₂O → -Si-OH + R-OH
(b1) -Si-OH + HO-Si- → -Si-O-Si- + H₂O
(b2) -Si-OR + HO-Si- → -Si-O-Si- + R-OH

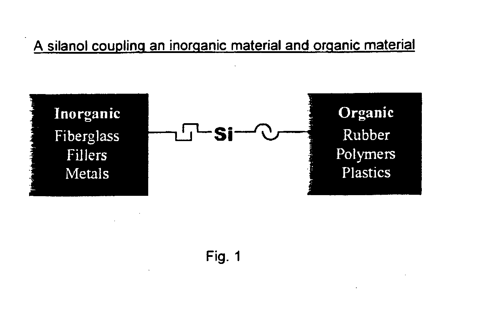

Such reactions are of critical importance in most of the applications of alkoxysilanes: crosslinking occurs when a small alkoxysilane bridges silanol-ended molecules by condensation. Adhesion promoters and coupling agents interact with organic matrices through their organic function and covalently bond by their silanol end to the surface of glasses, metals or minerals (see Fig. 1). Therefore, alkoxysilanes are only efficient in those applications if their silanol groups remain uncondensed.

Different levels of reactivity towards hydrolysis and condensation are observed for the alkoxysilanes depending on different parameters such as the nature of the organic substituent and the nature of the alkoxy leaving group. In particular, amino-containing alkoxysilanes, which are used primarily as coupling agents or adhesion promoters, are prone to undergo hydrolysis and condensation, which results in the formation of oligomers or polymers. These oligomers are less reactive than the monomers, or even not reactive at all in the relevant applications.

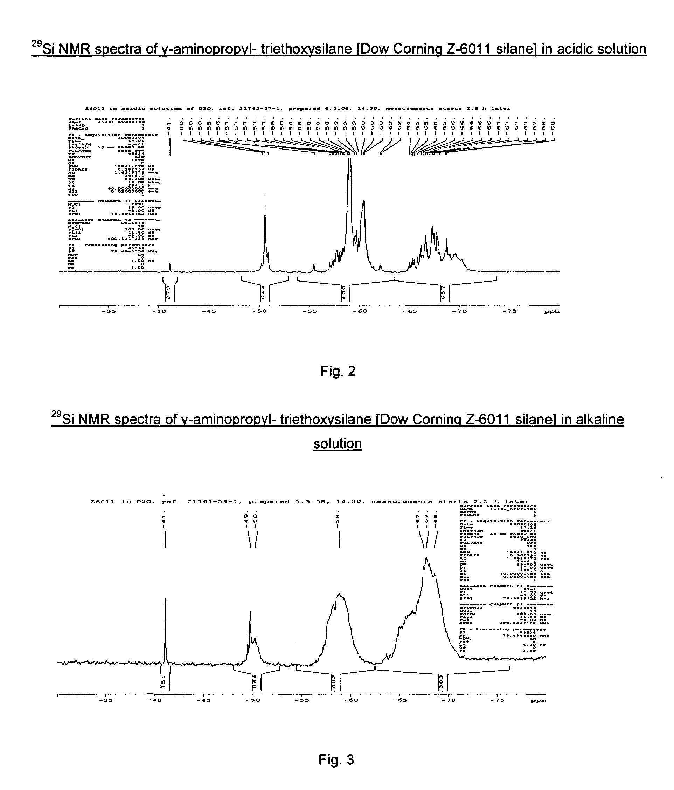

One common amino-containing alkoxysilane is γ-aminopropyl-β-aminoethyltrimethoxysilane [Dow Corning Z-6020 silane]. Figures 2 to 4 represent the ²⁹Si NMR spectra of γ-aminopropyl-β-aminoethyltrimethoxysilane in an acidic, alkaline or neutral aqueous solution respectively. The resonances (in ppm) in each spectra represent the following Si species:
- 41: Si(O-Si)₀(T⁰)
- 50: Si(O-Si)₁/(T¹)
- 58: Si(O-Si)₂/(T²)
- 67: Si(O-Si)₃/(T³)

Consequently, the peak at -50, which represents an Si(O-Si)₁, indicates that hydrolysis and condensation has occurred once at the silicon atoms causing that resonance thereby resulting in one Si-O-Si cross-linkage. Although the proportions of the differing species vary depending on the conditions, condensation can be seen to occur in all instances with very little of the Si being present as T° (for which no hydrolysis / condensation has occurred).

Therefore, a process to prepare alkoxysilanes in a solid form should avoid conditions which could cause condensation and in particular should avoid contact with water. Further, the solid form itself should be as stable as possible to hydrolysis and condensation.

Processes for the preparation of silanes in a solid form are known in the art. One process involves the mixing and/or emulsification of a silane into an aqueous polymeric solution and subsequent spray drying to remove the water (see for example WO 2004/098898 and US20040019141). Generally the aqueous polymeric solution (binder) is a film forming polymer e.g. polyvinyl alcohol (PVA). These processes are appropriate for silanes used as hydrophobing agents (most often alkyl silanes) which are not very sensitive to hydrolysis and therefore may be prepared in aqueous solutions. However, for silanes which are sensitive to water (including as discussed above alkoxysilanes) contact with the aqueous binders would cause significant hydrolysis and condensation and therefore this technique is not suitable.

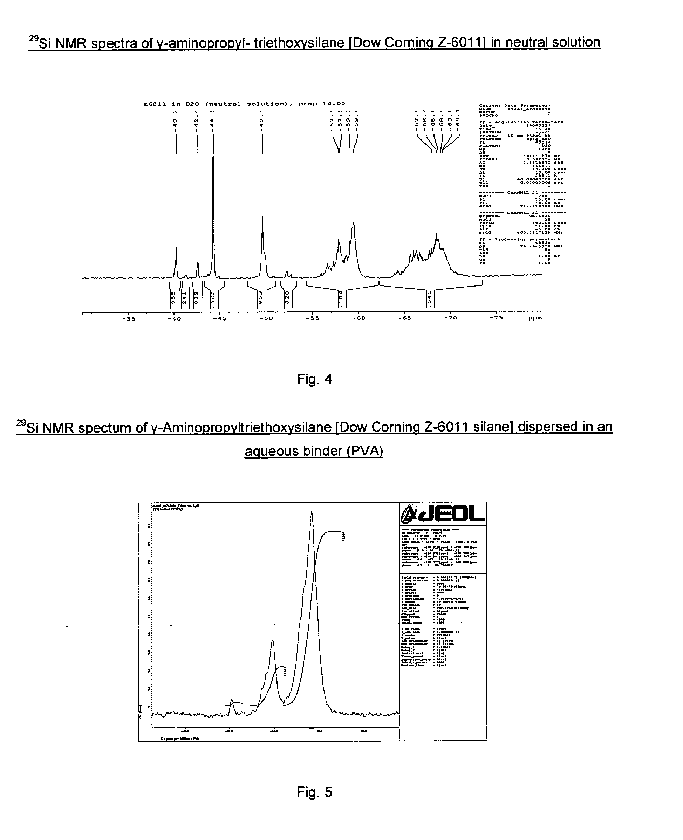

In this regard, figure 5 illustrates the ²⁹Si NMR spectum of γ-aminopropyltriethoxysilane [Dow Corning Z-6011 silane] dispersed in an aqueous binder (PVA). This spectrum shows a high level of condensation with the resonance at -67 ppm indicating more than 80% of silicon is present as Si(O-Si)₃ (T³) and the lack of a resonance at -41 indicating the γ-aminopropyltriethoxysilane (uncondensed alkoxysilane - Si(O-Si)₀ or T⁰) has been entirely reacted.

Alternatively an agglomeration technique may be used wherein an active material is dispersed in a binder (an aqueous film forming polymer or wax) and the resulting emulsion is sprayed onto a carrier powder (e.g. Dow Corning patent application WO/2008/062018 describes a process for preparing a powder which is used as a hydrophobing agent for cementitious materials). The agglomeration technique may be used for hydrophobing agents, which are still efficient even if partially condensed, but for the other silanes (especially alkoxysilanes which are very sensitive to hydrolysis), the contact with either aqueous or hot binders results in a high level of hydrolysis and condensation, therefore causing a significant loss of efficiency in the product.

Another process involves absorption of a silane onto a carrier powder (see for example DE 195 03 779, DE 44 35 311 and EP 0 426 073). This process may be used for rubbers (mercapto silanes), bitumen (alkyl, amino, isocyanates, halogeno, cationic alkoxy silanes) or PEX (vinyl silanes). The carrier may be a silica or carbon black (the obtained powder is therefore black, which is not suitable for applications outside rubbers or bitumen). However, if highly reactive silanes (e.g. an amino-silane) are absorbed onto these carriers, the reactive sites of the alkoxysilane will form covalent bonds with the SiOH groups of the silica and therefore the alkoxysilane would be of no use as, for example, a coupling agent. Other reactions such as the hydrolysis and condensation reaction discussed above also start rapidly and will lead to new species that do not behave the same way as the original silanes and may no longer be usable. Therefore, only relatively stable silanes may be absorbed on carriers in this manner.

A further method comprises the step of absorbing the silane onto a porous material e.g. porous polyolefins such as Accurel® from Membrana. These microporous polymer products are made from commercially available resins. Some common resins available in microporous form are polypropene, linear low density polyethylene, low density polyethylene, high density polyethylene and polyamide. The microporous products act like tiny sponges with the ability to absorb several times their own weight of a silane into their micron-size voids by capillary absorption. Although this technology is the most efficient method for converting silanes into solid forms in that hydrolysis and condensation reactions can be avoided, a drawback with this approach is the high price of the porous polymers and their polyolefinic nature make them not suitable for applications outside of plastics, and therefore the use of this process is limited.

In summary, several processes have been described in the prior art to prepare solid products comprising silanes. In the main these processes are directed towards hydrophobing silanes which are not sensitive to hydrolysis and condensation, and which remain sufficiently active even if partially hydrolysed and condensed because their organic part is the functional component in the end application - some reaction at the silicon can be tolerated.

For other silanes such as hydrophilic silanes (epoxy, amino, etc) or crosslinkers (i.e. vinyl or methylalkoxysilanes), the prior art techniques for the preparation of solid forms are inefficient because they involve either an aqueous dispersion of the silane or a dispersion in a hot wax which results in a high level of hydrolysis and condensation. Further, although absorption onto microporous polymers can minimise side-reactions, the high cost this process involves prevents wide use of this technique.

The present invention is accordingly directed towards the provision of a process for the preparation of solid silanes which does not result in the condensation of the silane and solid silane products which are stable to condensation.

Accordingly, the invention provides a composition comprising a wax and a reactive silane, wherein the reactive silane is combined with the wax in the form of solid particles. The wax provides a sufficient barrier to atmospheric moisture to prevent hydrolysis and condensation of the silane.

As mentioned above, methods known in the prior art for preparing solids comprising silanes are not appropriate for reactive silanes.

In another aspect, the invention provides a process for the preparation of the composition according to the invention comprising the steps of:
(i) mixing a molten wax and a reactive silane under a dry atmosphere, and
(ii) allowing the product of (i) to cool to form a solid.

In another aspect, the invention provides a process for the preparation of the composition according to the invention comprising the steps of:
(i) mixing a molten wax and a reactive silane at a temperature below 150°C, and
(ii) allowing the product of (i) to cool to form a solid.

In another aspect, the invention provides a process for the preparation of the composition according to the invention comprising the steps of:
(i) mixing a molten wax and a reactive silane at a temperature below 150'C and under dry atmosphere, and
(ii) allowing the product of (i) to cool to form a solid.

The present invention will now be described with reference to the following drawings, in which:
Fig. 1 illustrates a coupling agent;
Figs. 2-4 show the ²⁹Si NMR spectra of γ-Aminopropyltriethoxysilane [Dow Corning Z-6011 silane] in acidic, alkaline or neutral aqueous solutions respectively;
Fig. 5 shows the ²⁹Si NMR spectum of γ-Aminopropyltriethoxysilane [Dow Corning Z-6011 silane] dispersed in an aqueous binder (PVA);
Fig. 6 shows a scanning electron microscope (SEM) picture of a particle of the composition according to the invention comprising γ-aminopropyl-β-aminoethyltrimethoxysilane [Dow Corning Z-6020 silane] encapsulated with glyceryl tribehenate.
Fig. 7 shows the rates of hydrolysis of aminopropyltriethoxysilane [APES and Dow Corning Z-6011 silane], 3-methacryloxypropyl trimethoxysilane (MPMS), octyltriethoxy silane (OES) and 3-mercaptopropyl trimethoxysilane (MRPMS);
Fig. 8 shows the ²⁹Si NMR Spectra of Pure γ-aminopropyl-β-aminoethyltrimethoxysilane [Dow Corning Z6020 silane] (top) and γ-aminopropyl-β-aminoethyltrimethoxysilane [Dow Corning Z6020 silane] solid particles (bottom) in CDCl₃/Cr(acac)₃;
Fig. 9 shows the tensile strength of EVA/ATH compounds prepared without use of a coupling agent (reference) and also with use of a coupling agent which is liquid Z-6011 or with use of a coupling agent which is the solid particles according to the invention comprising Z-6011 combined with glyceryl tribehenate and
Fig. 10 shows the elongation at break of EVA/ATH compounds prepared without use of a coupling agent (reference) and also with use of a coupling agent which is liquid Z-6011 or with use of a coupling agent which is the solid particles comprising Z-6011 according to the invention combined with a glyceryl tribehenate.

As mentioned, the invention provides a composition comprising a wax and a reactive silane, wherein the reactive silane is combined with the wax in the form of solid particles. The wax provides a sufficient barrier to atmospheric moisture to prevent hydrolysis and condensation of the silane.

In a preferred embodiment, each solid particle comprises a silane core surrounded by a layer of wax, such that the wax surrounds the silane core. However, the present invention relates to an industrial process and in practice each particle may vary in relation to the positioning of the wax and the silane.

The invention is not limited to any particular silane. However, the invention is directed towards a composition in a solid form including a silane, and the resulting material is resistant to hydrolysis by atmospheric condensation and in particular hydrolysis and a process for the preparation of such a solid form which avoids such hydrolysis. Consequently, the silane is a reactive silane. For the present invention, a reactive silane is one which is susceptible to hydrolysis and condensation to form siloxane bonds but also due to reaction at, for example, the organic side chain of the silane. Definitions of what is meant by a reactive silane are provided herein, in particular by their rates of hydrolysis under certain conditions.

In one embodiment of the invention the silane is an alkoxysilane. Alkoxysilanes are often susceptible to the hydrolysis condensation reaction discussed above. The reactivity of an alkoxysilane can be measured by the rate at which it hydrolyses in water. Example 2 provides a method for measuring the rate at which a silane hydrolyses in water (NMR-Spectroscopic Investigations on the Hydrolysis of Functional Trialkoxysilanes, M. Brand, A. Frings, P. Jenkner, R. Lehnert, H. J. Metternich, J. Monkiewicz, J. Schram, Z. Naturforsch. 54 b, 155-164 (1999); eingegangen am 9. September 1998). This technique involves measuring the rate constant k (in h⁻¹) wherein a higher rate constant indicates a higher rate of hydrolysis.

In one embodiment of the invention, the reactive silane has a rate constant for hydrolysis as measured by the method of example 2 (pH 4.0, HCl) of greater than 1 h⁻¹, greater than 2 h⁻¹ or greater than 5 h⁻¹. In one embodiment of the invention, the reactive silane has a rate constant for hydrolysis as measured by the method of example 2 (pH 7.0) of greater than 0.1 h⁻¹, greater than 0.5 h⁻¹ or greater than 1 h⁻¹.

In the claims references to rate of hydrolysis of silanes refer to rates of hydrolysis measured by the method of example 2 (pH 4.0, HCl).

In one embodiment of the invention the silane is an amino-containing alkoxysilane. It can be seen from example 2 that rates of hydrolysis are particularly high for amino-containing alkoxy silanes - see samples 1A (3-aminopropyltrimethoxysilane) and 1 B (aminopropyltriethoxysilane) in table 2 which have rates of hydrolysis too fast to be measured in acid conditions.

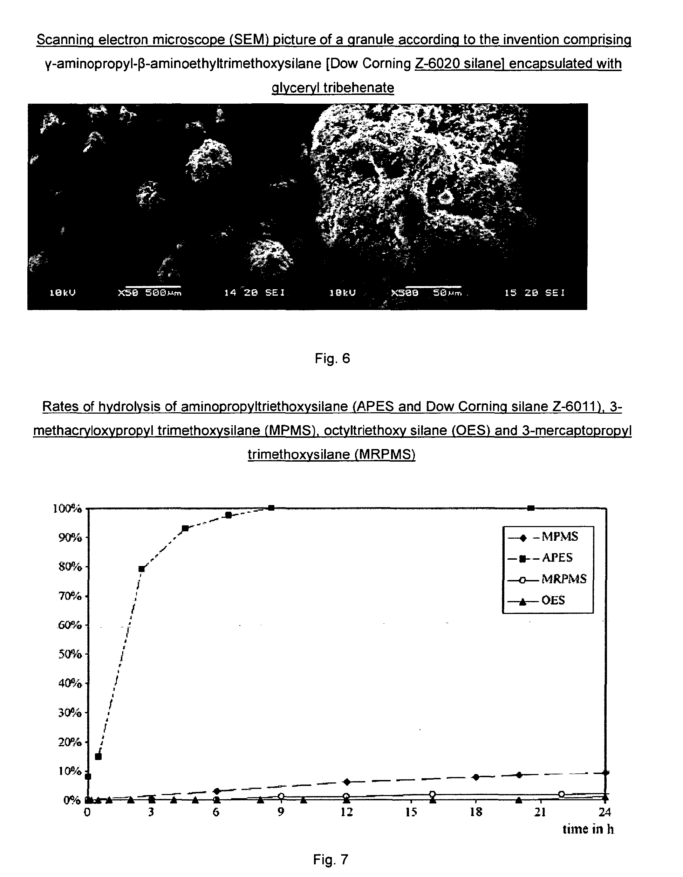

Further, Fig. 7 illustrates the rates of hydrolysis of aminopropyltriethoxysilane (APES and Dow Corning Compound Z-6011), 3-methacryloxypropyl trimethoxysilane (MPMS), octyltriethoxy silane (OES) and 3-mercaptopropyl trimethoxysilane (MRPMS) (Marie-Christine Brochier Salon a, Pierre-Alain Bayle b, Makki Abdelmouleh c,Sami Boufic, Mohamed Naceur Belgacem, Colloids and Surfaces A: Physicochem. Eng. Aspects 312 (2008) 83-91).

It can be seen from Fig.7 that the hydrolysis of aminopropyltriethoxysilane [Dow Corning compound Z-6011] is much more rapid than the hydrolysis of the other alkoxysilanes - this is typical for an amino-containing alkoxysilane. Consequently, amino-containing alkoxysilanes are particularly suitable to formulated into the granulated product of the invention, and therefore in one embodiment of the invention the silane is an amino-containing alkoxysilane.

In one embodiment of the invention the amino-containing alkoxysilane is of the formula (I): 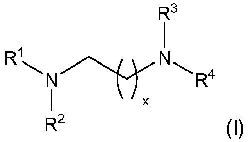 wherein:
x is an integer which is 0, 1, or 2;
R¹ represents a group 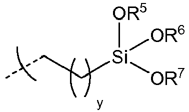
wherein y is an integer which is 0, 1, 2 or 3, and R⁵, R⁶ and R⁷ are independently selected from C₁-C₄ alkyl;
R², R³ and R⁴ are independently selected from hydrogen and 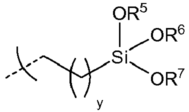
wherein y is an integer which is 0, 1, 2 or 3, and R⁵, R⁶ and R⁷ are independently selected from C₁-C₄ alkyl.

In one embodiment of the invention, x is 1 and therefore the core of the molecule of formula (I) is a 1,2 diaminoethyl moiety. However, other lengths of carbon chain can be used and in particular x may also be 2 in which case the core of the molecule of formula (I) is a 1,3 diaminopropyl moiety.

In one embodiment of the invention, y is 2 and therefore the nitrogen atom and the silicon atom are separated by a linker comprising three CH₂ groups. However, again other lengths of carbon chain may be used and in particular y may also be 1 and therefore the nitrogen atom and the silicon atom are separated by a linker comprising two CH₂ groups or y may 3 and therefore the nitrogen atom and the silicon atom are separated by a linker comprising four CH₂ groups.

The invention also includes examples all possible combinations of x and y as discussed above. However, preferably x is 1 and y is 2.

R⁵, R⁶ and R⁷ are C₁-C₄ alkyl groups. As is common knowledge, C₁-C₄ alkyl includes methyl, ethyl, propyl, i-propyl, n-butyl, i-butyl or t-butyl, and R⁵, R⁶ and R⁷ may be independently selected from any of these alternatives. However, in particular, R⁵, R⁶ and R⁷ all represent methyl.

In one embodiment of the invention R², R³ and R⁴ are

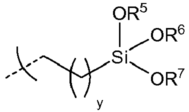

In this embodiment of the invention, none of R², R³ and R⁴ represent hydrogen.

In one embodiment of the invention R² and R³ are 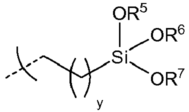 and R⁴ is H. In this embodiment of the invention, one of the N atoms of the core of the molecule is bound to one hydrogen atom, and the other N atom is not bound to a hydrogen atom.

In one embodiment of the invention R² is 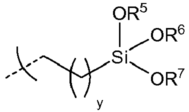 and R³ and R⁴ are H. In this embodiment of the invention, one of the N atoms of the core of the molecule is bound to two hydrogen atoms and therefore is a group NH₂ and the other N atom is not bound to a hydrogen atom.

In one embodiment of the invention R³ is 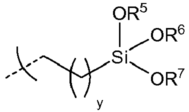 and R² and R⁴ are H. In this embodiment of the invention each of the N atoms of the core of the molecule is bound to one hydrogen atom.

In one embodiment of the invention R², R³ and R⁴ each represent hydrogen. In this embodiment of the invention, one of the N atoms of the core of the molecule is bound to two hydrogen atoms and therefore is a group NH₂ and the other N atom is bound to one hydrogen atom.

In one embodiment of the invention the amino-containing alkoxysilane compound of formula I is selected from: 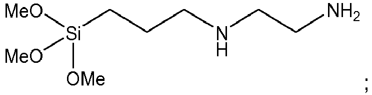 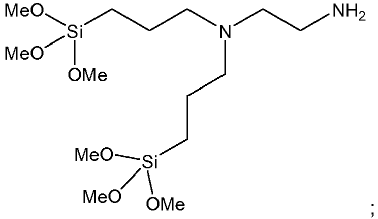 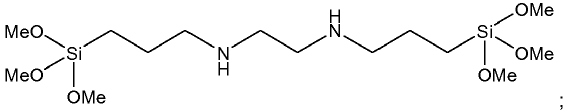 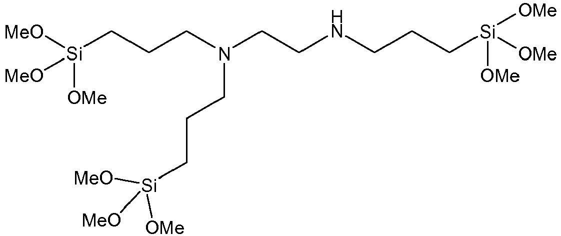 or

In particular, the most preferred amino-containing alkoxysilane compound of formula I is:

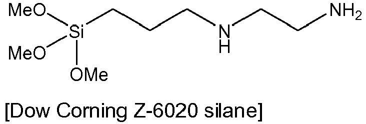

Another amino-containing alkoxysilane that can be mentioned is:

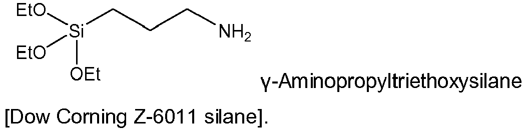

Other reactive alkoxysilanes of particular interest are trialkoxysilanes having a relatively small alkyl subsituent. For example, it can be seen from example 2 that rates of hydrolysis are high for for alkoxysilanes such as 9A (methyltrimethoxysilane) and 14A (vinyltrimethoxysilane).

Therefore, in one embodiment of the invention the reactive silane is a trimethoxysilane or a triethoxysilane. In one embodiment the trimethoxysilane or triethoxysilane has the formula (II) 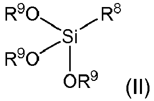 wherein R⁸ represents C₁₋₈ hydrocarbyl optionally substituted with amino, -O-CH₂-CH(O)CH₂, or-OC(O)C(CH₃)=CH₂ and R⁹ represents C₁₋₂ hydrocarbyl. As is well known to the skilled person, but for completeness, hydrocarbyl means a univalent group formed by removing a hydrogen atom from a hydrocarbon. Preferably R⁸ represents C₁₋₆ hydrocarbyl and more preferably C₁₋₄ hydrocarbyl. Particular examples of R⁸ that can be mentioned include methyl, ethyl, propyl, i-propyl, n-butyl, i-butyl, t-butyl, vinyl and phenyl.

Due to the relatively small size of the methyl group, methoxysilanes undergo hydrolysis more quickly than other alkoxy silanes. Example 2 shows that rates of hydrolysis are particularly high for trimethoxysilanes - see examples 9A (methyltrimethoxysilane) and 9B (methyltriethoxysilane) which have k = 20.71 and 2,19 respectively at pH= 4 (HCl). Therefore, preferably R⁹ represents C₁ hydrocarbyl or methyl.

Particularly preferably the trialkoxysilane of formula (II) is selected from:

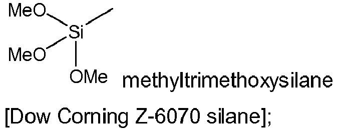

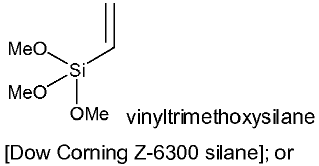

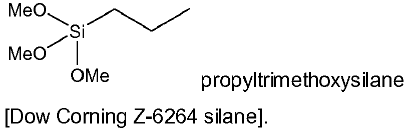

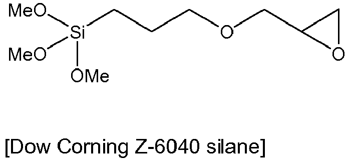

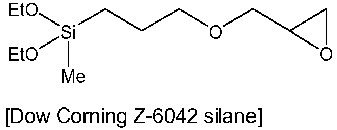

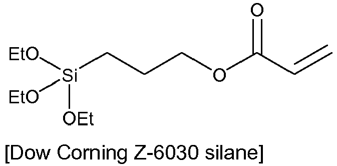

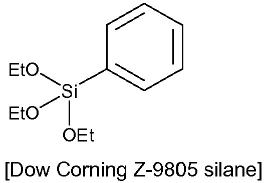

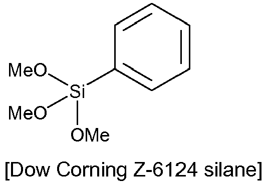

As discussed above, the role of the wax is to substantially encapsulate (or entrap or surround or enclose) the reactive silane to protect the reactive silane and prevent it reacting with the atmosphere, and particularly with atmospheric water by hydrolysis and condensation. Consequently, the wax must be made of a substance which is essentially impermeable to water.

The term wax is not intended to imply any specific chemical composition. Rather, wax is intended to mean a species which is a solid at room temperature but melts at a temperature sufficiently low for it to be mixed with the liquid silane. In one embodiment of the invention, the wax melts at a temperature of less than 200'C and preferably less than 150°C. The melting point of at least 25° C., more preferably at least 35° C., and most preferably a melting point in the range 45-100° C.

The wax may have a viscosity (as measured using a rheometer fited with a cone-plate spindle of 40 mm in diameter and with a angle of 1° shear rate of 100 s⁻¹) at 120°C of less than 0.3 Pa.s (300 cP), preferably less than 0.2 Pa.s (200 cP) and more preferably less than 0.1 Pa.s (100 cP).

In one embodiment the wax is a heat-sensitive substance generally consisting of hydrocarbons, fatty acids or esters of fatty acids, fatty alcohols or ethers of fatty alcohols like ethoxylated fatty alcohols, or fatty aminines or amides that are insoluble in water but soluble in nonpolar organic solvents. Examples of waxes that can be mentioned include mono-, di-, and tri-glycerides, polyethylene glycols (for example PEG, PEG monostearate e.g. radiasurf 7473 from Oleon, PEG distearate e.g. radiasurf 7454), fatty acids (for example stearic acid or other C12-C22 e.g.Radiacid 414 from Oleon), polyol esters, fatty alcohols (for example stearyl alcohol e.g. Nacol 18-98 from Sasol), fatty esters (for example ethylene glycol esters e.g. ethylene glycol mono or distearate (i.e. Radia 7268 or Radiasurf 7270), glycerides e.g. mono, di, tri- stearate or behenate (i.e. Radia 7515), amides (for example erucamide e.g. Crodamide ER from Croda), and ethoxylates (for example Oleth 20 (BRIJ 020 from Croda) or Steareth 20 (BRIJ S20 from Croda)). Further, natural waxes such as bees wax or carnauba wax can be mentioned.

The wax can have a polar functional group. Example of polar groups include alcohol groups, and examples of waxes include long chain primary, secondary or tertiary alcohols including fatty alcohols, which are preferably saturated alcohols, ethoxylated fatty alcohols, ethoxylated fatty acids, ethoxylated alkyl phenols and partial esters of polyols.

In addition the polar group may be a COOH group, for example a fatty acid, preferably saturated acids, having 8 to 36 carbon atoms, for example stearic acid, palmitic acid, behenic acid or 12-hydroxystearic acid. Mixtures of fatty acids can be used. Alternatively the polar group may be an amide group, for example a monoamide of saturated or unsaturated fatty acids having 12 to 36 carbon atoms, for example stearamide or the amides sold under the Trade Mark Crodamide The polar group may also be an amino groups, for example an alkyl amine having 8 to 30 carbon atoms such as 1-octylamine and 1-dodecylamine or stearylamine.

The wax may also be non polar for example a polyol ester. The polyol ester may be substantially fully esterified by carboxylate groups each having 7 to 36 carbon atoms. The polyol ester is preferably a glycerol triester or an ester of a higher polyol such as pentaerythritol or sorbitol, but can be a diester of a glycol such as ethylene glycol or propylene glycol, preferably with a fatty acid having at least 16 carbon atoms, for example ethylene glycol distearate. Examples of preferred glycerol triesters are glycerol tristearate, glycerol tripalmitate and glycerol triesters of saturated carboxylic acids having 20 or 22 carbon atoms such as the material of melting point 54° C. Alternative suitable polyol esters are esters of pentaerythritol such as pentaerythritol tetrabehenate and pentaerythritol tetrastearate. The polyol ester can advantageously contain fatty acids of different chain length, which is common in natural products. Most preferably the polyol ester is substantially fully esterified by carboxylate groups each having 14 to 22 carbon atoms. By substantially fully esterified it is meant that for a diol such as ethylene glycol or a triol such as glycerol, at least 90% and preferably at least 95% of the hydroxyl groups of the polyol are esterified. Higher polyols, particularly those such as pentaerythritol which show steric hindrance, may be substantially fully esterified when at least 70 or 75% of the hydroxyl groups of the polyol are esterified; for example pentaerythritol tristearate has the effect of a fully esterified polyol ester.

Alternatively, the non-polar wax can be an ether or a hydrocarbon wax. For example the wax can comprise it can comprise at least one paraffin wax, optionally blended with microcrystalline wax.

The wax may contain the above listed examples in any combination and number.

The composition of the invention is in the form of solid particles. The term "particles" is not intended to imply any precise geometic meaning and merely means that the solid comprises a plurality of discrete parts.

In particular, the term particles is intended to cover granules, flakes, pellets and the like.

The particles typically have a mean diameter of from about 50 µm to about 5000 µm. Each individual particle of the composition preferably has a diameter of more than 100 µm, more preferably more than 200 µm and most preferably more than 500 µm. Typically in the preferred embodiment of the invention the mean diameter is from about 50 µm to about 5000 µm, and more preferably from about 500 µm to about 4000 µm. The diameter of each particle within a given composition will of course vary to some extent. The term diameter is not intended to imply that the particles are spherical but rather refers to the longest dimension of the particles.

A scanning electron microscope (SEM) picture of a particle according to the invention comprising Z-6020 encapsulated with glyceryl tribehenate is shown at Fig. 6.

Optionally, the composition may include a powder and another embodiment of the invention provides the composition and a powder. The powder is not particularly limited and anything that can support the granulated solid may be used. An example of a powder is a mineral, excluding any mineral having SiOH functionality. Examples include calcium carbonate, sodium carbonate, sodium bicarbonate, magnesium carbonate dolomite, sodium sulfate, calcium sulfate, magnesium sulfate, iron sulfate, alumina, calcium hydroxide, sodium acetate, peat, wood flour, sugar and sugar derivatives, starch and native starch, corn cob, methyl cellulose, carboxy methyl cellulose, sand polystyrene beads and polyacrylate beads, fly ash. Another example of a powder is an organic solid. It is preferred that the powder particles have a mean diameter of from 0.2 to 1000 µm, more preferably 0.2 to 50 µm, most preferably 1 to 10 µm. The powder particles may be water-insoluble, water-soluble or water-dispersible.

The invention also provides the use of the composition as a crosslinking agent, a hydrophobing or reactive agent, a coupling agent, a powder treatment or an adhesion promoter. Surprisingly, the applicant has found that the silane encapsulated in the wax retains its activity - see example 4 where the silane can be used a cross-linker in its granulated form without loss of activity compared to the pure silane.

In a further aspect, the invention provides a process for the preparation of the composition according to the invention.

In a first embodiment, the invention provides a process for the preparation of the composition according to the invention comprising the steps of:
(i) mixing a molten wax and a reactive silane under a dry atmosphere, and
(ii) allowing the product of (i) to cool to form a solid.

In a second embodiment, the invention provides a process for the preparation of the composition according to the invention comprising the steps of:
(i) mixing a molten wax and a reactive silane at a temperature below 150°C, and
(ii) allowing the product of (i) to cool to form a solid.

In a third embodiment, the invention provides a process for the preparation of the composition according to the invention comprising the steps of:
(i) mixing a molten wax and a reactive silane at a temperature below 150°C and under a dry atmosphere, and
(ii) allowing the product of (i) to cool to form a solid.

Therefore, a process in which the mixture is at a temperature of below 150°C at all times falls within the scope of the invention. Further, a process during which the mixture is at all times under an anhydrous atmosphere until the mixture cools below a temperature of 150°C is also within the scope of the invention. However, a process in which the temperature of the mixture is above 150°C whilst not under an anhydrous atmosphere is not within the scope of the invention.

The term mixing is intended to have broad meaning, and in the context of the invention includes any process wherein the wax and silane are combined to produce the solid particles of the invention. Preferably, as mentioned above, the particles comprise a silane core coated with the wax and the term mixing is to be construed to cover such processes.

Preferably a dry atmosphere is applied over the mixture by application of an inert anhydrous gas, for example nitrogen or argon.

In one embodiment, the mixing of the molten wax and the reactive silane takes place wherein the temperature is below 120°C, preferably below 90°C, and more preferably below 65°C.

The method by which the granules are allowed to solidify is not particularly limited - essentially the granules can merely be left to cool, but preferably cold air is blown over the granules to speed the cooling step or the mixture is applied to a surface, especially a cooled surface.

As discussed, the applicant has discovered that the problem of forming a solid comprising a silane and a wax is that the silane tends to undergo hydrolysis and condensation when contacted with the molten wax. The applicant has discovered that this problem is overcome by limiting the contact time between the wax and the silane in a wet atmosphere whilst the wax and the silane are at the elevated temperature required to make the wax molten.

The invention provides two preferred methods by which the contact time between the hot wax and silane, whilst the hot waxand silane are exposed to the moist atmosphere, is limited:
In the first method the step of combining the molten wax and the silane and the step of allowing the mixture of wax and silane to cool takes place under an anhydrous atmosphere. Preferably,
the process is a flaking process and the under a dry atmosphere and the solid prepared is in the form of flakes.

In the second method, the temperature at which the step of combining the molten wax and the silane to form a mixture of the silane and the wax takes place is controlled.

Three embodiments of the second method may be mentioned:
- A fluid bed granulation process where the silane and the molten wax are sprayed in a fluidized bed of granules to form granular material.
- A prilling or microencapsulation process where the silane and the molten wax are coextruded to form droplets which will cool down in the cold air and form solid material.
- Granulation process using mixing tools to mix the wax, the silane and a powder to produce granular material with reduced porosity.

Preferably, the length of time of steps (i) and (ii) is made as short as possible by combining the molten wax and the silane to form a mixture of the silane and the wax by urging the molten wax and the silane from a nozzle.

Preferably the nozzle is further adapted to promote the formation of the granular product, for example by addition of a gas e.g. nitrogen, application of ultrasound, application of pressure or rotation. Examples of appropriately adapted nozzles are 3-fluid or 4-fluid nozzles from Schlick which can supply air, sonic nozzles having a dual liquid feed which apply ultrasound from, for example, Sono-tek, centrifugal extrusion nozzles which apply rotation, for example, as developed by the SwRI institute, the vibrating nozzle from Nisco, Buhler or Brace, or the spinning-disk such as developed by Sprai SAS.

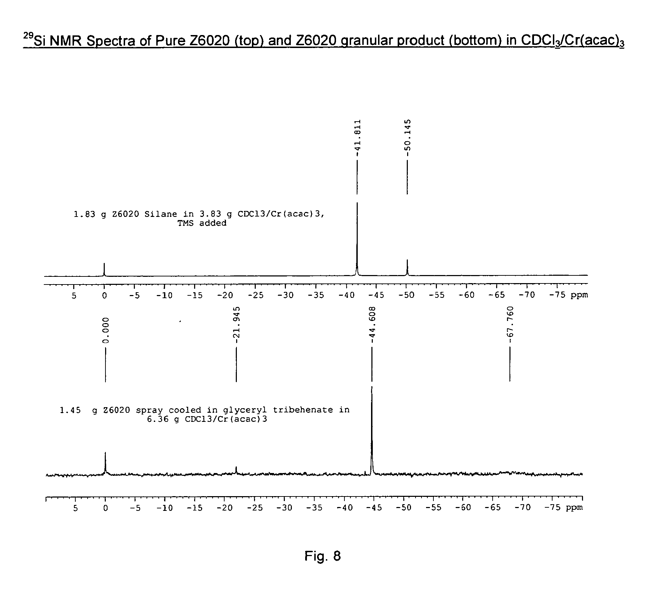

Use of this process has been found to reduce contact time between the wax and the silane before encapsulation occurs thereby minimising opportunity for hydrolysis of the silane by the atmosphere. In this regard, please see example 4 and Fig. 8 which illustrate that a granulated solid comprising Z-6020 coated with glyceryl tribehenate can be formed using the process according to the invention without hydrolysis of this reactive silane.

As discussed, the benefit of the process of the invention is the efficiency of these silanes is maintained in the granulated products - that is the silanes do not undergo hydrolysis and condensation reactions during the process to prepare the granulated solid. The improved result is derived from the use of waxes instead of aqueous binders and the choice of the process conditions which prevent hydrolysis of the reactive silane prior to the silane being combined with the wax.

The process takes place with the wax heated to a temperature at which the wax has a sufficiently reduced viscosity to be supplied to and atomized from the nozzle. The precise temperature used will depend on the nature of the wax and in particular the variation of the viscosity of that wax with temperature. However, typically the wax is heated to a temperature of at least 50°C.

After the granular product is extruded from the nozzle the granules are allowed to solidify. Therefore, in addition to having a viscosity at an elevated temperature which is sufficiently low to allow extrusion from and supply to the nozzle, the wax must have a sufficiently low viscosity at lower temperatures, for example temperatures below 40°C or below 30°C, to remain coated around the silane.

Optionally, in an additional step the granules can be coated again with the same wax or another wax, for example by spraying the appropriate wax over the granules. This helps provide an even more uniform wax.

Also optionally, the granules may be applied to a powder as defined herein to prepare the solid an a powder.

The surface may be cylindrical, in which embodiment cylindrical is intended to mean substantially cylindrical rather than apply any precise geometrical shape.

After the solid is allowed to cool, the solid may be subsequently divided into granules having a diameter of less than 5000 µm, or less than 2500 µm.

The invention also provides a composition obtainable by any one of the processes according to the invention.

### Examples

### Example 1

A sample for SEM was prepared by sprinkling small portions of the solid particles formed by example 5 onto carbon adhesive tape on a sample stub and coating with 12 nm of Au/Pd. The JEOL JSM-5600LV SEM was used with a 14mm working distance and an aperture of 1. Digital images were acquired in secondary electron modes. The resulting image is illustrated at Fig. 6.

### Example 2

1.0 ml of the silane was added to a mixture of 22 ml of water / D₂O, with acid as appropriate, 28 ml of acetone and stirred at about 500 rpm, At required time intervals about 0.6 ml of the mixture was removed and its NMR spectra measured to determine the extent of hydrolysis. The experiment was stopped when no unhydrolysed material could be detected.

Table 1 shows the rate constant of hydrolysis for various silanes and Table 2 identifies the silanes used.

**Table 1**

| Silane | | k [h⁻¹] (with stirring) | | |
|---|---|---|---|---|
| | | HCl pH 4.0 | HAc pH 4.0 | H₂O pH 7.0 |
| **1** | **A** | - | - | 513.00 |
| | **B** | - | - | 0.38 |
| **2** | **A** | 27.12 | 23.10 | 15.96 |
| | **B** | 3.7 | 3.3 | 0.03 |
| **3** | **A** | - | - | 340.14 |
| **4** | **A** | 6.99 | 6.19 | 1.28 |
| | **B** | 1.09 | 0.34 | 0.014 |
| **5** | **A** | 1.04 | 2.45 | < 0.001 |
| **6** | **A** | 2.70 | 2.63 | 0.72 |
| | **B** | 0.03 | 0.04 | 0.004 |
| **7** | **A** | 2.00 | 1.88 | 1.19 |
| **8** | **A** | 6.91 | 7.87 | 0.52 |
| | **B** | 0.44 | 0.16 | 0.02 |
| **9** | **A** | 20.71 | 2.08 | 0.70 |
| | **B** | 2.19 | 0.79 | 0.007 - |
| **10** | **A** | 1.16 | 1.95 | - |
| | **B** | 0.22 | 0.3 | 0.01 |
| **11** | **A** | 1.55 | 1.44 | - |
| **12** | **A** | 12.42 | 5.88 | 0.74 |
| | **B** | 0.71 | 0.24 | 0.04 |
| **13** | **A** | - | - | 201.00 |
| **14** | **A** | 19.67 | 3.27 | 1.18 |
| | **B** | 1.63 | 0.13 | 0.07 |
| **15** | **A** | 11.10 | 9.18 | 1.09 |
| | **B** | 0.58 | 0.23 | 0.07 |

**Table 2**

| No. | Name | Abbrev. |
|---|---|---|
| **1 a** | 3-Aminopropyltrimethoxysilane | AMMO |
| **b** | 3-Aminopropyltriethoxysilane | AMEO |
| **2 a** | 3-Chloropropyltrimethoxysilane | CPTMO |
| **b** | 3-Chloropropyltriethoxysilane | CPTEO |
| **3 a** | 2-Aminoethyl-3-aminopropyltrimethoxysilane | DAMO |
| **4 a** | 3-Glycidyloxypropyltrimethoxysilane | GLYMO |
| **b** | 3-Glycidyloxypropyltriethoxysilane | GLYEO |
| **5 a** | Hexadecyltrimethoxysilane | HDTMO |
| **6 a** | Isobutyltrimethoxysilane | IBTMO |
| **b** | Isobutyltriethoxysilane | IBTEO |
| **7 a** | 3-Mercaptopropyltrimethoxysilane | MTMO |
| **8 a** | 3-Methacryloxypropyltrimethoxysilane | MEMO |
| **b** | 3-Methacryloxypropyltriathoxysilane | MEEO |
| **9 a** | Methyltrimethoxysilane | MTMS |
| **b** | Methyltriethoxysilane | MTES |
| **10 a** | Octyltrimethoxysilane | OCTMO |
| **b** | Octyltriethoxysilane | OCTEO |
| **11 a** | Pentyltrimethoxysilane | PETMO |
| **12 a** | Propyltrimethoxysilane | PTMO |
| **b** | Propyltriethoxysilane | PTEO |
| **13 a** | (2-Aminoethyl)-2-aminoethyl-3-aminopropyltrimethoxysilane | TRIAMO |
| **14 a** | Vinyltrimethoxysilane | VTMO |
| **b** | Vinyltriethoxysilane | VTEO |
| **15 a** | Tetramethoxysilane | - |
| **b** | Tetraethoxysilane | - |

### Example 3

The viscosity of waxes may be measured using a rheometer MCR 300 from the company Physica, using a spindle of 40 mm, 1°, a temperature profile was carried out. The viscosity (in cP) was recorded every 5 °C from 120 °C to 60°C under a shear rate of 100 s⁻¹. The values are recorded in table 3 below.

**Table 3**

| Temp (°C) | Viscosity (cP) | | |
|---|---|---|---|
| | Glyceryl tribehenate (Radia 7515™) | Paraffin | Oleam ide (crodamide™) |
| 120 | 11.8 | 3.6 | 7.5 |
| 115 | 12.2 | 3.9 | 8.1 |
| 110 | 13.1 | 4.3 | 9.2 |
| 105 | 13.2 | 4.7 | 10.6 |
| 100 | 13.9 | 5.1 | 12.2 |
| 95 | 15.1 | 5.6 | 14.1 |
| 90 | 17.1 | 6.2 | 16.4 |
| 85 | 19.1 | 6.9 | 19.4 |
| 80 | 21.7 | 7.5 | 23.0 |
| 75 | 24.9 | 8.4 | 7330.0 |
| 70 | 28.7 | 9.5 | 16530.0 |
| 65 | 34.1 | 10.9 | Solid |
| 60 | 39.8 | 14.7 | Solid |

### Example 4

Solid particles were prepared using a fluidised bed from Glatt. Z-6020 was sprayed with Radia 7515 (glyceryl tribehenate) using a three-fluid nozzle at the bottom of a bed of fluidized granules.

The silane was fed at room temperature with a peristaltic pump though an inner tube and the glyceryl tribehenate heated to 90°C was fed with a peristaltic pump through an external tube (the internal and external tube being approximately concentric). Nitrogen gas at a pressure of 1 bar was applied through the third aperture on the nozzle to promote formation of particles.

The particles prepared progressively grew in size and, once large enough (typically diameter greater than 100 µm, but larger particles are preferred they are continuously removed from the fluidized bed to provide the particulate product.

### Example 5

Z-6020 was sprayed with Radia 7515 (glyceryl tribehenate) in a spray cooling equipment using a two-fluid nozzle to prepare solid particles. Figure 8 compares the ²⁹Si NMR spectra of pure Z6020 (top) and the Z6020 granular product (bottom). It can be seen that no condensation has occurred to for the solid particle product: the only peak observed corresponds to the uncondensed siloxy groups.

### Example 6

Z-6011 was sprayed with Radia 7515 (glyceryl tribehenate) in a spray cooling equipment using a two-fluid nozzle to prepare solid particles.

Aluminium trihydrate (ATH) is known to be an efficient flame retardant but it is difficult to incorporate into thermoplastic matrixes, for example ethylene vinyl acetate (EVA), in which it is generally used.

In this example, ATH was mixed with EVA using a brabender mixer. The components were mixed in the ratio EVA (99.6 parts), antioxidant (Irganox 1010 from CIBA, 0.4 parts) ATH (150 parts), and, if present, Z-6011 (1.2 parts) or solid particles of Z-6011 prepared by a process analogous to example 4 (50% active, 2.4 parts).

The use of a coupling agent allows better incorporation of the filler into the ATH and therefore a better uniformity of the end product resulting in improved mechanical properties.

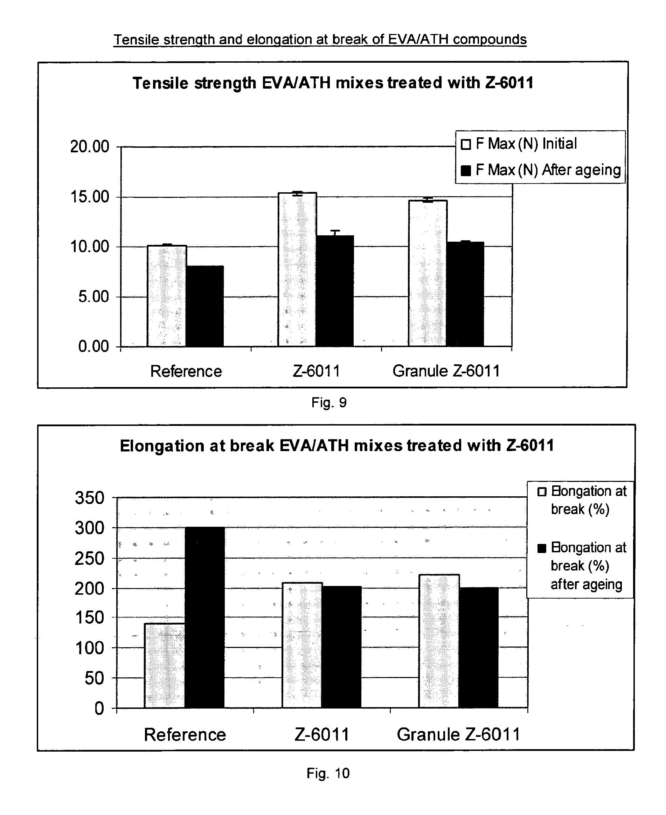

Figure 9 and 10 compare the mechanical properties (tensile strength and elongation at break) of the EVA/ATH compounds prepared without use of a coupling agent (reference), and also with use of a coupling agent which is liquid Z-6011 or with use of a coupling agent which is the solid particles comprising Z-6011 encapsulated with glyceryl tribehenate.

Figure 9 shows the tensile strength of each EVA/ATH mix and Figure 10 shows the elongation at break of each EVA/ATH mix. The initial results (bar on left hand side of pair) are compared to results after 7 days ageing at 70°C (bar on right hand side of pair).

The use of liquid Z-6011 and the solid particle product both result in increased tensile strength initially and after aging. The solid particle product provides the same effect as the liquid. Moreover, while the reference suffers from ageing (high increase of the elongation at break and large decrease of the tensile strength) the silane treated compounds maintain most of their beneficial properties.

## Claims

1. A composition comprising a wax and a reactive silane wherein the reactive silane is combined with the wax in the form of solid particles.

2. The composition according to any preceding claim wherein the reactive silane is an alkoxysilane.

3. The composition according to claim 1 or 2 wherein the reactive silane has a rate constant for hydrolysis (pH 4.0, HCl) of greater than 1 h⁻¹.

4. A composition according to any preceding claim wherein the wax has a viscosity as measured using a rheometer fited with a cone-plate spindle of 40 mm in diameter and with a angle of 1° shear rate of 100 s⁻¹ at 120°C of less than 0.3 Pa.s (300 cP), preferably less than 0.2 Pa.s (200 cP) and more preferably less than 0.1 Pa.s (100 cP).

5. The composition according to any preceding claim wherein the reactive silane is an amino-containing alkoxysilane.

6. The composition according to claim 5 wherein the amino-containing alkoxysilane is of the formula (I): 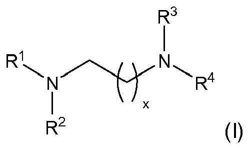 wherein:
x is an integer which is 0, 1, or 2;
R¹ represents a group 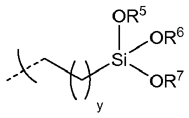
wherein y is an integer which is 0, 1, 2 or 3, and R⁵, R⁶ and R⁷ are independently selected from C₁-C₄ alkyl;
R², R³ and R⁴ are independently selected from hydrogen and 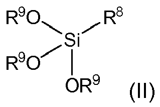 wherein R⁸ represents C₁₋₈ hydrocarbyl optionally substituted with amino, -O-CH₂-CH(O)CH₂, or -OC(O)C(CH₃)=CH₂ and R⁹ represents C₁₋₂ hydrocarbyl, preferably wherein R⁹ represents methyl

7. The composition according to any preceding claim additionally comprising a powder, preferably wherein the powder is a mineral or organic solid.

8. A process for the preparation of the composition according to any one of claims 1 to 7 comprising the steps of:
(i) mixing a molten wax and a reactive silane under a dry atmosphere, and
(ii) allowing the product of (i) to cool to form a solid.

9. A process for the preparation of the composition according to any one of claims 1 to 7 comprising the steps of:
(i) mixing a molten wax and a reactive silane at a temperature below 150°C, and
(ii) allowing the product of (i) to cool to form a solid.

10. A process for the preparation of the composition according to any one of claims 1 to 7 comprising the steps of:
(i) mixing a molten wax and a reactive silane at a temperature below 150°C and under a dry atmosphere, and
(ii) allowing the product of (i) to cool to form a solid.

11. A process according to claim 9 or 10 wherein the temperature is below 120°C, preferably below 90°C, and more preferably below 65°.

12. A process according to claim 8 or 10 wherein the dry atmosphere is applied over the mixture by application of an inert anhydrous gas.

13. A process according to any one of claims 8 to 12 wherein the solid comprises less than 5% by weight of silane which is condensed.

14. A composition obtainable by the process according to any one of claims 8 to 13.

15. The use of the composition according to any one of claims 1 to 7 or 14 as a coupling agent, cross-linker, adhesion promoter, powder treatment, hydrophobing or reactive agent.

## Patentansprüche

1. Zusammensetzung, umfassend ein Wachs und ein reaktives Silan, wobei das reaktive Silan mit dem Wachs in Form von Feststoffteilchen kombiniert ist.

2. Zusammensetzung nach einem der vorstehenden Ansprüche, wobei das reaktive Silan ein Alkoxysilan ist.

3. Zusammensetzung nach Anspruch 1 oder 2, wobei das reaktive Silan eine Reaktionsgeschwindigkeitskonstante für Hydrolyse (pH-Wert 4,0, HCl) von mehr als 1 h⁻¹ aufweist.

4. Zusammensetzung nach einem der vorstehenden Ansprüche, wobei das Wachs eine Viskosität, gemäß Messung mit einem Rheometer, das mit einer Kegel-Platte-Spindel mit einem Durchmesser von 40 mm und mit einem Winkel von 1° Scherrate von 100 s⁻¹ bei 120 °C ausgestattet ist, von weniger als 0,3 Pa.s (300 cP), vorzugsweise weniger als 0,2 Pa.s (200 cP) und mehr bevorzugt weniger als 0,1 Pa.s (100 cP) aufweist.

5. Zusammensetzung nach einem der vorstehenden Ansprüche, wobei das reaktive Silan ein aminohaltiges Alkoxysilan ist.

6. Zusammensetzung nach Anspruch 5, wobei das aminohaltige Alkoxysilan die folgende Formel (I) besitzt: 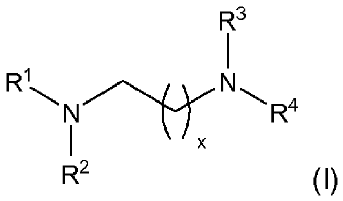 worin:
x eine ganze Zahl ist, die 0, 1 oder 2 ist;
R¹ für eine Gruppe 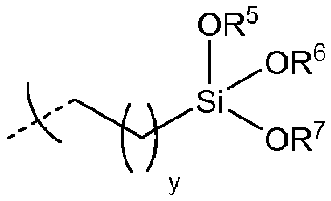
steht, worin y eine ganze Zahl ist, die 0, 1, 2 oder 3 ist, und R⁵, R⁶ und R⁷ unabhängig ausgewählt sind aus C₁-C₄-Alkyl;
R², R³ und R⁴ unabhängig ausgewählt sind aus Wasserstoff und 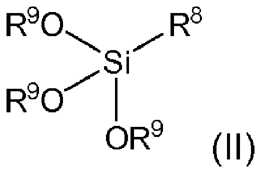
worin R⁸ für C₁₋₈-Hydrocarbyl steht, wahlweise substituiert mit Amino, -O-CH₂-CH(O)CH₂ oder -OC(O)C(CH₃)=CH₂, und R₉ für C₁₋₂-Hydrocarbyl steht, wobei R⁹ vorzugsweise für Methyl steht

7. Zusammensetzung nach einem der vorstehenden Ansprüche, zusätzlich umfassend ein Pulver, wobei das Pulver vorzugsweise ein mineralischer oder organischer Feststoff ist.

8. Verfahren für die Zubereitung der Zusammensetzung nach einem der Ansprüche 1 bis 7, umfassend die folgenden Schritte:
(i) Mischen eines geschmolzenen Wachses und eines reaktiven Silans unter einer trockenen Atmosphäre und
(ii) Abkühlenlassen des Produkts von (i), um einen Feststoff zu bilden.

9. Verfahren für die Zubereitung der Zusammensetzung nach einem der Ansprüche 1 bis 7, umfassend die folgenden Schritte:
(i) Mischen eines geschmolzenen Wachses und eines reaktiven Silans bei einer Temperatur von unter 150 °C und
(ii) Abkühlenlassen des Produkts von (i), um einen Feststoff zu bilden.

10. Verfahren für die Zubereitung der Zusammensetzung nach einem der Ansprüche 1 bis 7, umfassend die folgenden Schritte:
(i) Mischen eines geschmolzenen Wachses und eines reaktiven Silans bei einer Temperatur von unter 150 °C und unter einer trockenen Atmosphäre und
(ii) Abkühlenlassen des Produkts von (i), um einen Feststoff zu bilden.

11. Verfahren nach Anspruch 9 oder 10, wobei die Temperatur unter 120 °C, vorzugsweise unter 90 °C und mehr bevorzugt unter 65° beträgt.

12. Verfahren nach Anspruch 8 oder 10, wobei die trockene Atmosphäre durch Anwendung eines inerten wasserfreien Gases über der Mischung angewendet wird.

13. Verfahren nach einem der Ansprüche 8 bis 12, wobei der Feststoff zu weniger als 5 Gew.-% Silan umfasst, das kondensiert ist.

14. Zusammensetzung, erhältlich durch das Verfahren nach einem der Ansprüche 8 bis 13.

15. Verwendung der Zusammensetzung nach einem der Ansprüche 1 bis 7 oder 14 als Haftvermittler, Vernetzungsmittel, Adhäsionspromotor, Pulverbehandlung, hydrophobierendes oder reaktives Mittel.

## Revendications

1. Composition comprenant une cire et un silane réactif, dans laquelle le silane réactif est combiné avec la cire sous la forme de particules solides.

2. Composition selon l'une quelconque des revendications précédentes, dans laquelle le silane réactif est un alcoxysilane.

3. Composition selon la revendication 1 ou 2, dans laquelle le silane réactif a une constante de vitesse pour l'hydrolyse (pH 4,0, HCl) supérieure à 1 h⁻¹.

4. Composition selon l'une quelconque des revendications précédentes, dans laquelle la cire a une viscosité, telle que mesurée à l'aide d'un rhéomètre équipé d'un mobile cylindrique à cône-plaque de 40 mm de diamètre et avec un angle de 1°, une vitesse de cisaillement de 100 s⁻¹ à 120 °C, inférieure à 0,3 Pa.s (300 cP), de préférence inférieure à 0,2 Pa.s (200 cP) et, plus préférablement, inférieure à 0,1 Pa.s (100 cP).

5. Composition selon l'une quelconque des revendications précédentes, dans laquelle le silane réactif est un alcoxysilane contenant un groupe amino.

6. Composition selon la revendication 5, dans laquelle l'alcoxysilane contenant un groupe amino est de formule (I) : 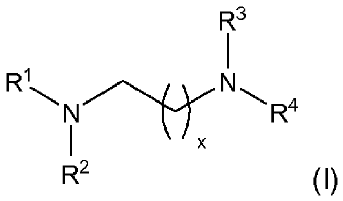 dans laquelle :
x est un nombre entier qui vaut 0, 1 ou 2 ;
R¹ représente un groupe 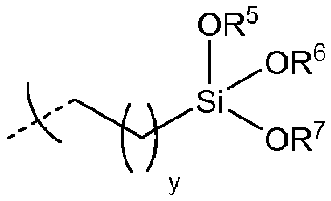
où y est un nombre entier qui vaut 0, 1, 2 ou 3, et R⁵, R⁶ et R⁷ sont indépendamment choisis parmi un alkyle en C₁ à C₄ ;
R², R³ et R⁴ sont indépendamment choisis parmi l'hydrogène et 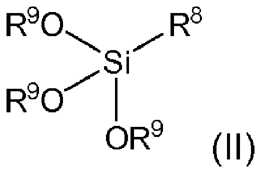
où R⁸ représente un hydrocarbyle en C_{1 à 8} éventuellement substitué par amino,-O-CH₂-CH(O)CH₂ ou -OC(O)C(CH₃)=CH₂ et R⁹ représente un hydrocarbyle en C_{1 à 2}, de préférence où R⁹ représente méthyle.

7. Composition selon l'une quelconque des revendications précédentes, comprenant en outre une poudre, de préférence dans laquelle la poudre est un solide minéral ou organique.

8. Procédé pour la préparation de la composition selon l'une quelconque des revendications 1 à 7, comprenant les étapes consistant à :
(i) mélanger une cire fondue et un silane réactif sous une atmosphère sèche, et
(ii) laisser le produit de (i) refroidir pour former un solide.

9. Procédé pour la préparation de la composition selon l'une quelconque des revendications 1 à 7, comprenant les étapes consistant à :
(i) mélanger une cire fondue et un silane réactif à une température inférieure à 150 °C, et
(ii) laisser le produit de (i) refroidir pour former un solide.

10. Procédé pour la préparation de la composition selon l'une quelconque des revendications 1 à 7, comprenant les étapes consistant à :
(i) mélanger une cire fondue et un silane réactif à une température inférieure à 150 °C et sous une atmosphère sèche, et
(ii) laisser le produit de (i) refroidir pour former un solide.

11. Procédé selon la revendication 9 ou 10, dans lequel la température est inférieure à 120 °C, de préférence, inférieure à 90 °C et, plus préférablement, inférieure à 65 °C.

12. Procédé selon la revendication 8 ou 10, dans lequel l'atmosphère sèche est appliquée sur le mélange par application d'un gaz anhydre inerte.

13. Procédé selon l'une quelconque des revendications 8 à 12, dans lequel le solide comprend moins de 5 % en poids de silane qui est condensé.

14. Composition pouvant être obtenue par le procédé selon l'une quelconque des revendications 8 à 13.

15. Utilisation de la composition selon l'une quelconque des revendications 1 à 7 ou 14 en tant qu'agent de couplage, agent réticulant, promoteur d'adhésion, traitement de poudre, agent d'hydrophobisation ou réactif.
